# EUROPÄISCHE PATENTANMELDUNG

(11) **EP 2 070 679 A1**
(43) Veröffentlichungstag der Anmeldung: **17.06.2009**
(21) Anmeldenummer: 07024063.5
(22) Anmeldetag: 12.12.2007
(51) Int. Cl.: B29C 45/14, B29C 45/16, B60R 13/02, B29L 31/58

(54) **Verfahren un Vorrichtung zur Herstellung eines Formteils mit mindestens einem im Formteil integrierten Dekorbereich**

(71) Anmelder: PEGUFORM GMBH, 79268 Bötzingen (DE)
(72) Erfinder: Buchet, Yann, 67000 Strasbourg (FR)
(74) Vertreter: Neunert, Peter Andreas

(57) **Zusammenfassung**

Die vorliegende Erfindung betrifft ein Verfahren sowie eine Vorrichtung zur Herstellung von Fcrmteilen für Innenverkleidungen von Kraftfahrzeugen mit integrierten Dekorbereichen. Mit der erfindungsgemäßen Vorrichtung bzw. dem entsprechenden Verfahren gelingt es, im Spritzgießverfahren Formteile mit integrierten Dekorbereichen ohne zusätzliche Bearbeitungsschritte, wie z.B. Beschneiden des Randbereiches der Dekorfolie 9, mit optisch einwandfreiem und präzisem Fugenverlauf des Dekorrands herzustellen.

## Beschreibung

Die vorliegende Erfindung betrifft ein Verfahren zur Herstellung eines Formteils mit mindestens einem im Formteil integrierten Dekorbereich durch Hinterformen mindestens einer in ein einen Kern und eine Matrize umfassendes Formwerkzeug eingelegten Dekorfolie. Die Erfindung betrifft auch ein Formwerkzeug zur Herstellung eines derartigen Formteils, wobei das Formwerkzeug einen Kern und eine Matrize umfasst.

Es ist bekannt, bestimmte Bereiche von Formteilen für Innenverkleidungen von Kraftfahrzeugen mit Gewebematerialien, Kunststoff-Folien, Filz oder Teppichmaterialien, Leder oder auch Lederimitaten als Dekor zu veredeln. Dabei können den Dekorbereichen neben den besonderen optischen und haptischen Eigenschaften auch technische Funktionen zukommen. Üblicherweise werden zur Herstellung von Dekorbereichen von Formteilen entsprechende Gewebe- oder Dekorfolien in ein Formwerkzeug eingelegt und anschließend mit thermoplastischem Kunststoff hinterformt. In einem separaten Arbeitsgang wird dann der Randbereich des Dekorelements bearbeitet, bevor das Formteil fertiggestellt wird.

Soll ein Formteil mit unterschiedlichen Oberflächenstrukturen oder Dekorbereichen versehen werden, löst man diese Aufgabe gewöhnlich dadurch, dass zwei separate Teile mit unterschiedlichen Oberflächenstrukturen in unterschiedlichen Werkzeugen als Halbzeug vorgefertigt und anschließend miteinander verbunden bzw. verklebt werden. Diese Vorgehensweise hat allerdings den Nachteil, dass mehrere Verarbeitungsschritte sowie Transportvorgänge für die entsprechenden Halbzeuge durchgeführt und miteinander koordiniert werden müssen, was mit einem entsprechenden zusätzlichen zeit- und fertigungstechnischem Aufwand verbunden ist.

In der EP 1 655 122 A1 wird ein Verfahren zur Herstellung von Kunststoff-Formteilen beschrieben, bei dem in einem ersten Fertigungsschritt ein erstes Gewebe bzw. eine Dekorfolie in ein Formwerkzeug eingelegt und hinterspritzt wird und anschließend ein Teilstück aus dem so hergestellten Halbzeug ausgestanzt wird. In einem zweiten Schritt wird dann ein zweites Gewebe bzw. eine Dekorfolie an Stelle des entfernten Teils des Halbzeugs eingelegt und das Halbzeug wird dann im Bereich des zweiten Gewebes bzw. der zweiten Folie ebenfalls hinterformt.

Ein Nachteil dieses Verfahrens ist darin zu sehen, dass auch hier mehrere Arbeitsschritte erforderlich sind, um zu einem Formteil mit unterschiedlichen Dekorbereichen zu kommen. Dabei ist insbesondere das Herausschneiden oder Stanzen als zusätzlicher Arbeitsschritt nicht nur zeit- und kostenaufwändig, sondern erfordert auch ein entsprechendes zusätzliches Werkzeug, das in das Formwerkzeug eingreift. Wenn darüber hinaus in einer in der EP 1 655 122 A1 als bevorzugte Ausführungsform beschriebenen Ausgestaltung des Verfahrens ohne Werkzeugwechsel gearbeitet werden soll, muss beim direkten Eingriff des Stanzwerkzeugs in das Formwerkzeug eine Beschädigung des Formwerkzeugs befürchtet werden.

Bei nahezu allen bekannten und praktizierten Verfahren zur Herstellung von Formteilen mit Dekorbereichen für Kraftfahrzeuginnenverkleidungen ist es üblich, dass entweder während der Fertigung des Formteils oder spätestens nach seiner Fertigstellung ein Beschneiden des Randes des Dekorbereichs durchzuführen ist, um einen passgenauen und optisch einwandfreien Sitz des Dekorelements im Formteil zu erreichen.

Die saubere und optisch makellose Gestaltung des Randbereichs des Dekors ist somit allgemein eines der Probleme bei der Herstellung von Formteilen mit integrierten Dekorbereichen für Innenverkleidungen.

In der Offenlegungsschrift DE 10 2005 029 849 A1 wird ein Verfahren zur Herstellung eines Verbundelements für die Fahrzeugkarosserie beschrieben, wobei mindestens zwei flächige Teile einer Außenhaut nebeneinander in ein gemeinsames Werkzeug eingelegt und in dem Werkzeug über ihre gesamte Fläche mit einer gemeinsamen Trägerstruktur versehen werden. Bei dem Verfahren ist vorgesehen, Teile der Außenhaut als separate Teile in das Werkzeug einzulegen, wobei benachbarte Teile der Außenhaut am Rand dichtend überlappen. Der Nachteil dieses Verfahrens besteht darin, dass der Übergangsbereich zwischen den einzelnen unterschiedlichen Flächen mit einer starken optischen Abgrenzung verbunden ist. Daher ist dieses Verfahren für die Herstellung von Karosserieelementen im Außenbereich vorgesehen, wo derartige Übergänge teilweise gewollt sind oder durch entsprechende Maßnahmen, wie z. B. das Anbringen einer Leiste, kaschiert werden können. Für die Herstellung von Formteilen mit unterschiedlichen Dekorbereichen für die Innenverkleidung von Kraftfahrzeugen, insbesondere Instrumententafeln, Seitenverkleidungen oder Türverkleidungen, ist das in dem Dokument beschriebene Verfahren nicht geeignet.

In der DE 103 20 210 A1 werden Innenverkleidungsteile mit Dekorelementen beschrieben, bei denen der Randbereich des Dekorelements umlaufend durch einen Dekoraussparungsrand bedeckt wird, wobei eine flächige Anlageverbindung zwischen Dekorelement, Randbereich und Dekoraussparungsrand realisiert wird. Hier hat man die Problematik eines unregelmäßigen Fugenbildes entlang des Randbereiches des Dekorelements zwar ohne zusätzliches Beschneiden der Dekorfolien gelöst, jedoch kann ein exakter Fugen- bzw. Kantenverlauf zwischen Dekorelement und Verkleidungsteil nur dadurch erreicht werden, dass eine Vielzahl unterschiedlicher Bauteile miteinander verklebt bzw. kombiniert werden, was entsprechend aufwändig ist.

Es besteht somit weiterhin das Problem, ein Verfahren zur Herstellung von Formteilen mit integrierten Dekorbereichen für Innenverkleidungen von Kraftfahrzeugen zu finden, mit dessen Hilfe es gelingt, den Dekorbereich so in das Formteil einzufügen, dass keine zusätzlichen Maßnahmen, wie z. B. ein nachträgliches maßgenaue Schneiden oder ein Abdecken des Randbereichs mit Leisten oder zusätzlichen Randelementen, erforderlich sind, um einen optisch ansprechendes Fugenbild bzw. einen sauberen Randbereich des Dekorelements zu erhalten.

Gelöst wird die Aufgabe durch ein Verfahren mit den Merkmalen des Anspruchs 1 sowie eine Vorrichtung mit den Merkmalen des Anspruchs 12. Bevorzugte Ausführungsformen des erfindungsgemäßen Verfahrens sowie der erfindungsgemäßen Vorrichtung sind in den entsprechenden Unteransprüchen wiedergegeben.

Der erfindungswesentliche Schritt besteht darin, den Randbereich des Dekors mit Hilfe eines erfindungsgemäß ausgeführten Formwerkzeugs bereits so zu gestalten, dass ein nachträgliches Bearbeiten oder Schneiden des Randbereiches überflüssig wird.

Dazu wird ein Formwerkzeug eingesetzt, das im Wesentlichen einen Formwerkzeugkern und eine Formwerkzeugmatrize umfasst.

Mindestens ein Teilbereich des Formwerkzeugkerns, der für die Ausbildung des Dekors vorgesehen ist, ist an seinem Rand mit einer Aussparung versehen, an die sich unmittelbar ein im Formwerkzeugkern integrierter Schieber anschließt, der diesen Bereich zusätzlich begrenzt. Die Geometrie des Schiebers ist so ausgebildet, dass er geeignete Mittel, wie z.B. Flächen oder Ausnehmungen, für den Transport bzw. die Mitnahme einer Dekorfolie aufweist. Je nach Verfahrensstufe kann der Schieber unterschiedliche Positionen einnehmen, wobei der Schieber zwischen einer im Kern eingeführten und einer außerhalb des Kerns liegenden Position verschoben werden kann. Im geöffneten Zustand des Formwerkzeugs nimmt der Schieber eine zumindest teilweise außerhalb des Kerns angeordnete Position ein und ragt dabei so weit über die Oberfläche des Kerns hinaus, dass zwischen dem Kern und den Mitteln zur Mitnahme der Dekorfolie ausreichend Platz vorhanden ist, um eine Dekorfolie in das Formwerkzeug zwischen Kern und diesen mitnahmemitteln einzulegen.

Der Schieber besitzt in einer vorteilhaften Ausgestaltung eine flach ausgebildete, zum Kern weisende, relativ breite Rückseite, die zur Mitnahme der Dekorfolie vorgesehen ist. In diesem Fall ragt der Schieber im geöffneten Zustand des Werkzeugs vollständig über die Oberfläche des Kerns hinaus und kann beim Schließen eine zwischen Kern und Schieberrückseite eingelegte Dekorfolie mitnehmen.

Bei einer weiteren vorteilhaften Ausgestaltung besitzt der Schieber eine seitliche Aussparung, die für das Einlegen und die Mitnahme einer Dekorfolie vorgesehen ist. In diesem Fall reicht es aus, wenn der Schieber beim Öffnen des Werkzeugs soweit aus der Oberfläche des Kerns herausragt, dass ein Einlegen der Dekorfolie in die seitliche Aussparung des Schiebers möglich ist.

Die in Richtung Matrize zeigende Vorderseite des Schiebers ist vorzugsweise als stumpfer First eines Daches ausgebildet und besitzt eine flache Vorderkante, die zum Verbindungsschluss mit der Matrize vorgesehen ist. An die Vorderseite werden jedoch keine besonderen geometrischen Anforderungen gestellt, sondern sie muss lediglich zum Verbindungsschluss mit der Matrize geeignet sein.

Eine vorteilhafte Ausgestaltung des Formwerkzeugs sieht vor, dass im Kern zusätzlich in dem von der Aussparung eingefassten Bereich eine Spannfläche zur Fixierung der Dekorfolie angeordnet ist, die vorzugsweise im Kern beweglich ist und beim Einlegen der Dekorfolie über die Kernoberfläche hinausragt. Diese Spannfläche dient dazu, die Dekorfolie im Formwerkzeug zu fixieren, um ein Verrutschen der Dekorfolie beim Schließen des Formwerkzeugs zu verhindern. Die Spannfläche ist beim Einlegen der Dekorfolie zwischen der hinteren Schieberfläche bzw. der seitlichen Aussparung am Schieber und der Kernoberfläche positioniert.

Bei einer besonders vorteilhaften Ausführungsform der vorliegenden Erfindung sind korrespondierend zum Schieber auf der Matrize Stege angeordnet, die beim Schließen des Werkzeugs mit dem Schieber einen Formschluss bilden und dabei darüber hinaus die Funktion haben können, den Schieber zurück in den Formwerkzeugkern zu schieben. Gleichzeitig wird beim Schließen des Werkzeugs zwischen Matrize und Formwerkzeugkern eine Kavität für den Dekorbereich ausgebildet, die seitlich im Wesentlichen von dem Schieber bzw. dem korrespondierenden Steg begrenzt ist.

Beim Verschließen des Formwerkzeugs und dem Zurückschieben des Schiebers in den Formwerkzeugkern bildet sich zwischen Kern und Schieber durch die den Kernbereich umgebende Aussparung eine Nut aus, in die der Rand der Dekorfolie mit Hilfe des Schiebers eingeführt wird.

In der folgenden Beschreibung einer vorteilhaften Ausführungsform des erfindungsgemäßen Verfahrens werden die einzelnen Verfahrensschritte ausführlich erklärt.

In einem ersten Arbeitsschritt wird die Dekorfolie bei geöffnetem Werkzeug zwischen Kern und Rückseite des aus dem Kern hervorstehenden Schiebers bzw. in die seitliche Aussparung des Schiebers eingelegt. Bei einer vorteilhaften Ausgestaltung der Erfindung kann dabei die Dekorfolie zusätzlich auf einer Spannfläche fixiert werden, wobei die Spannfläche auf der Kernseite angeordnet ist und leicht über die Kernoberfläche hinaussteht. Die Fixierung der Dekorfolie kann dabei mit Hilfe von Nadeln oder ähnlichen Hilfsmitteln vorgenommen werden. Anschließend wird das Formwerkzeug geschlossen, indem die Matrize mit dem Kern zusammengeführt wird. Bei dieser Bewegung nimmt gemäß einer vorteilhaften Ausgestaltung der Erfindung die Matrize den Schieber mit, wobei der Schieber wiederum die Dekorfolie, die zwischen Schieber und Kern bzw. in die seitliche Aussparung des Schiebers eingelegt ist und mit ihrem Rand auf der Rückseite des Schiebers bzw. in der seitlichen Aussparung aufliegt, in Richtung Kern transportiert. Dabei wird der Rand der Dekorfolie in die durch die Aussparung am Kern zwischen Kern und Schieber ausgebildete Nut eingeführt. Das Werkzeug ist so konzipiert, dass es beim Schließen zu einem Formschluss zwischen Matrize und Schieber kommt und auf diese Weise eine Kavität zwischen Kern und Matrize ausgebildet wird, die seitlich im Wesentlichen durch den Schieber begrenzt wird.

Bei geschlossenem Werkzeug und geschlossener Kavität wird die Dekorfolie kernseitig mit einem thermoplastischen Kunststoff hinterformt, wobei die Dekorfolie mit ihrer Sichtseite von der Kunststoffmasse gegen die Matrizenoberfläche gepresst wird. Gleichzeitig wird der Rand der Dekorfolie aus der Nut heraus gegen den seitlichen Rand der Kavität gepresst. Nach dem Verfüllen der Kavität und dem Abkühlen des thermoplastischen Kunststoffs, wird das Formwerkzeug geöffnet, und es können anschließend die an den Dekorbereich angrenzenden Bereiche des Formteils ausgebildet werden.

Vorzugsweise handelt es sich beim Hinterformen um ein Hinterschäumen oder Hinterspritzen der Dekorfolie, wobei die Maße der Dekorfolie vorteilhaft so gewählt sind, dass nach dem Hinterformen des Dekorbereiches der wesentliche Teil des seitlichen Rands des Dekorbereichs von der Dekorfolie überlappt ist.

Eine besonders vorteilhafte Ausgestaltung der Erfindung sieht vor, dass die Vorderseite des Schiebers die Form eines stumpfen Daches aufweist, wobei der Dachfirst die Vorderkante des Schiebers bildet. Somit erhält der Dekorbereich einen von der Sichtseite her zumindest teilweise rückläufig ausgebildeten seitlichen Rand, der nach der Fertigstellung des Dekorbereichs vorzugsweise bis in seinen rückläufigen Abschnitt hinein mit der Dekorfolie bedeckt ist.

Auf diese Weise wird der im fertigen Formteil sichtbare Bereich des Rands des Dekors durch das Formwerkzeug selber maßgenau und mit exaktem Fugenverlauf gestaltet, während der Rand der Dekorfolie in einen Bereich verschoben wird, der nach der Fertigstellung des Formteils nicht mehr sichtbar ist. Die weitere Gestaltung des Formteils ist so vorgesehen, dass die dem Dekorbereich benachbarten Bereiche diesem fugengenau angepasst werden, womit ein nachträgliches Bearbeiten des Randes der Dekorfolie überflüssig wird.

Das Zurückschieben des Schiebers mit Hilfe der Matrize beim Schließen des Formwerkzeugs ist als optionale Lösung anzusehen. Ebenso ist es möglich, zunächst mit Hilfe des Schiebers die Dekorfolie in der Nut einzuspannen und anschließend das Werkzeug durch Zufahren mit der Matrize zu schließen.

Auch ist es möglich, über eine auf die Dekorfolie abgestimmte Nutdicke beim Einführen der Folie in die Nut im Randbereich des Dekors eine Vorspannung zu erzeugen, was mit dazu beiträgt eine Faltenbildung im Dekor zu verhindern.

Wie bereits eingangs erwähnt wurde, sieht eine vorteilhafte Ausgestaltung des Formwerkzeugs vor, dass korrespondierend zur vorderen Schieberkante auf der Matrize Stege angeordnet sind, die beim Schließen des Werkzeugs mit der Vorderkante des Schiebers in Wirkverbindung treten und einen Formschluss bilden. In diesem Fall wird die seitliche Begrenzung der Kavität für den Dekorbereich aus dem oben beschriebenen Steg und dem Schieber gebildet.

Als Dekorfolien können Gewebe, Dekorstoffe, Kunststoff-Folien, Teppichstoffe, Leder oder Lederimitate eingesetzt werden.

Als thermoplastische Kunststoffe zum Hinterformen des Formteils kommen Polypropylen (PP), Polyethylen (PE), Polyurethan (PU), Acrylnitril-Butadien-Styrol (ABS), Acrylnitril-Butadien-Styrol-Polycarbonat Copolymerisat (ABS-PC) oder Polyamid (PA) in Frage. Diese Kunststoffmaterialien können dabei pur oder auch als Mischungen eingesetzt werden. Ebenso kann es vorteilhaft sein, zusätzlich Faserverstärkungen, wie Carbon- oder Glasfasern, oder auch andere Additive zuzusetzen, welche die Eigenschaften des Formteils positiv beeinflussen können.

Üblicherweise werden nach dem erfindungsgemäßen Verfahren der Dekorbereich und der Rest des Formteils mit dem gleichen thermoplastischen Kunststoff hinterformt, um anschließend ein homogen aufgebautes Formteil zu erhalten. Es ist jedoch auch möglich, unterschiedliche, miteinander kombinierbare Kunststoffmaterialien einzusetzen, wenn man beispielsweise dem Dekorbereich bzw. den restlichen Bereichen des Formteils besondere Eigenschaften verleihen will. Dies kann so weit gehen, dass unterschiedliche Thermoplaste eingesetzt werden oder aber es werden bei gleichbleibendem Thermoplast durch den Zusatz entsprechender Additive die Eigenschaften des Formteils für bestimmte Bereiche gezielt variiert.

Im Folgenden wird die Erfindung anhand von ausgesuchten Beispielen sowie den dazugehörenden Zeichnungen ausführlich erläutert. Dabei zeigen:
- Figur 1: einen Querschnitt durch einen schematisch dargestellten Ausschnitt aus einem Formwerkzeug nach dem Einlegen einer Dekorfolie,
- Figur 2: den Querschnitt aus Figur 1 während des Schließens des Formwerkzeugs,
- Figur 3: den Querschnitt aus den Figuren 1 und 2 bei geschlossenem Formwerkzeug,
- Figur 4: den Querschnitt eines Ausschnitts aus dem Formwerkzeug während des Hinterformens der Dekorfolie,
- Figur 5: den Querschnitt aus Figur 4 nach dem Hinterformen des Dekorbereichs,
- Figur 6: einen Querschnitt der Matrize mit hinterformtem Dekorbereich,
- Figur 7: den Querschnitt aus Figur 6 bei einem nachfolgenden Bearbeitungsschritt und
- Figur 8: einen Querschnitt durch einen schematisch dargestellten Ausschnitt eines Formwerkzeugs mit einem Schieber mit seitlicher Schieberaussparung.

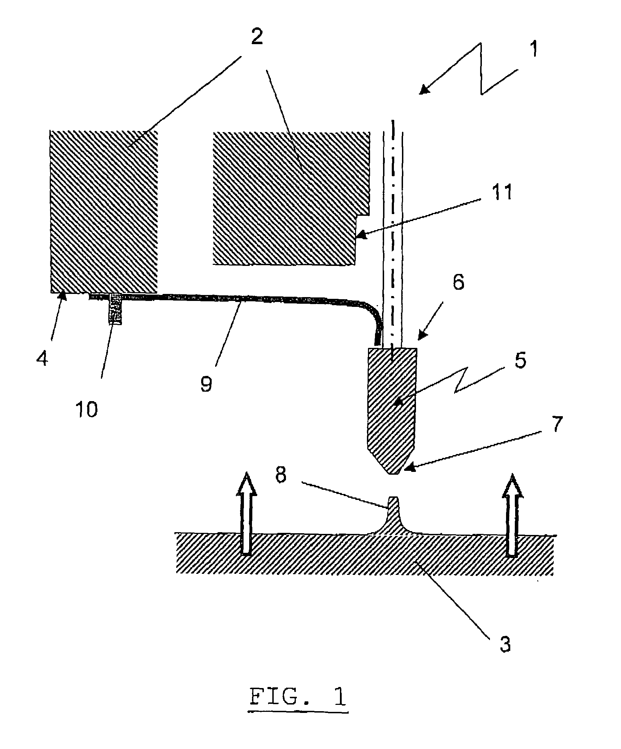

In der Figur 1 ist der Querschnitt eines Ausschnitts eines erfindungsgemäßen Formwerkzeugs 1 schematisch dargestellt. Diese Darstellungsweise dient vor allem dazu, den Schließmechanismus des Formwerkzeugs 1 mit gleichzeitigem Einspannen der Dekorfolie 9 darzustellen; dabei sind von den wesentlichen Teilen des Formwerkzeugs 1, nämlich der Matrize 3 und dem Kern 2, lediglich kleine Teilbereiche dargestellt, die zur Illustrierung der vorliegenden Erfindung erforderlich sind. Die Figur 1 gibt den Zustand des geöffneten Werkzeugs 1 wieder, nachdem die Dekorfolie 9 zwischen dem im Werkzeug 1 integrierten Schieber 5 und dem Kern 2 des Formwerkzeugs 1 eingelegt wurde. Bei der in der Abbildung 1 gezeigten Ausführungsform ist die Dekorfolie 9 mit einem Befestigungsmittel 10 auf einer Spannfläche 4 fixiert. Die Spannfläche 4 ist Teil des Formwerkzeugkerns 2, wobei die Spannfläche 4 in Richtung Matrize 3 leicht über die Oberfläche des Formwerkzeugkerns 2 hinausragt. Vom Formwerkzeugkern 2 selber ist ausschließlich der Bereich dargestellt, der für die Ausbildung des Dekorbereichs vorgesehen ist. Dieser Bereich ist mit einer Aussparung 11 umrandet, an die sich in unmittelbarer Nachbarschaft der Schieber 5 anschließt. Der Schieber 5 besitzt eine flach ausgeführte Rückseite 6, während die Vorderseite 7 sich zur vorderen Schieberkante hin verjüngt und eine Vorderkante in Form eines stumpfen Dachfirstes ausbildet. Auf der Oberfläche der Matrize 3 ist dem Schieber 5 direkt gegenüberliegend ein Steg 8 angeordnet. Die in der Matrize 3 angeordneten Richtungspfeile geben die Bewegungsrichtung der Matrize 3 zum Schließen des Formwerkzeugs 1 an.

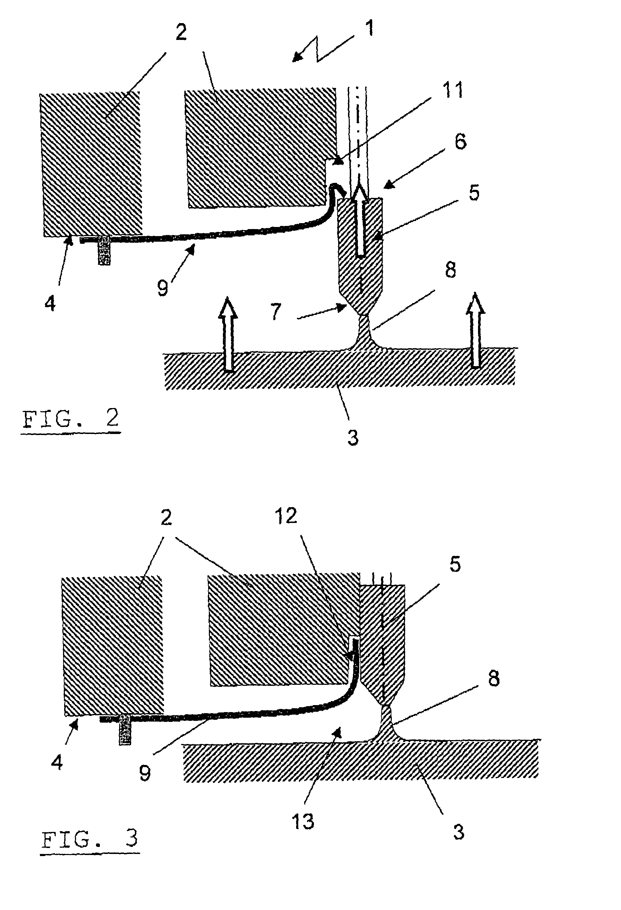

In der Figur 2 wird bei gleicher Darstellung ein Folgeschritt des Verfahrens dargestellt. Es handelt sich hierbei um eine Momentaufnahme während des Verschließens des Werkzeugs 1, wobei die Matrize 3 in Richtung Formwerkzeugkern 2 bewegt wird, was durch die entsprechenden Richtungspfeile im Bereich der Matrize 3 und auf dem Schieber 5 wiedergegeben ist. Die Matrize 3 ist über den Steg 8 formschlüssig mit der Vorderkante 7 des Schiebers 5 verbunden und schiebt den Schieber 5 während des Schließens des Formwerkzeugs 1 in den Kern 2. Im dargestellten Fall ist der Rand der Folie 9 mit der Rückseite 6 des Schiebers 5 bereits bis hin zur Aussparung 11 transportiert worden. Die Folie 9 selber ist dabei auf der Spannfläche 4 des Formwerkzeugkerns 2 fixiert.

Die Figur 3 zeigt den Ausschnitt des Formwerkzeugs 1 aus Figur 2 im geschlossenen Zustand des Formwerkzeugs 1. In diesem Zustand ist der Schieber 5 im Formwerkzeugkern 2 versenkt und es hat sich zwischen Formwerkzeugkern 2 und Schieber 5 unter Einbeziehung der Aussparung 11 eine Nut 12 ausgebildet, in welche die Folie 9 mit Hilfe der Rückseite 6 des Schiebers 5 eingeführt wurde. Bei dieser Momentaufnahme hat der Formgebungsprozess noch nicht begonnen und die Dekorfolie 9 ist noch an der Spannfläche 4 des Formwerkzeugkerns 2 fixiert. Durch den Formschluss zwischen Steg 8 und Schieber 5 ist eine geschlossene Kavität 13 zwischen der Matrize 3 und dem Kern 2 ausgebildet, die seitlich durch den Schieber 5 im Zusammenspiel mit dem Steg 8 begrenzt wird.

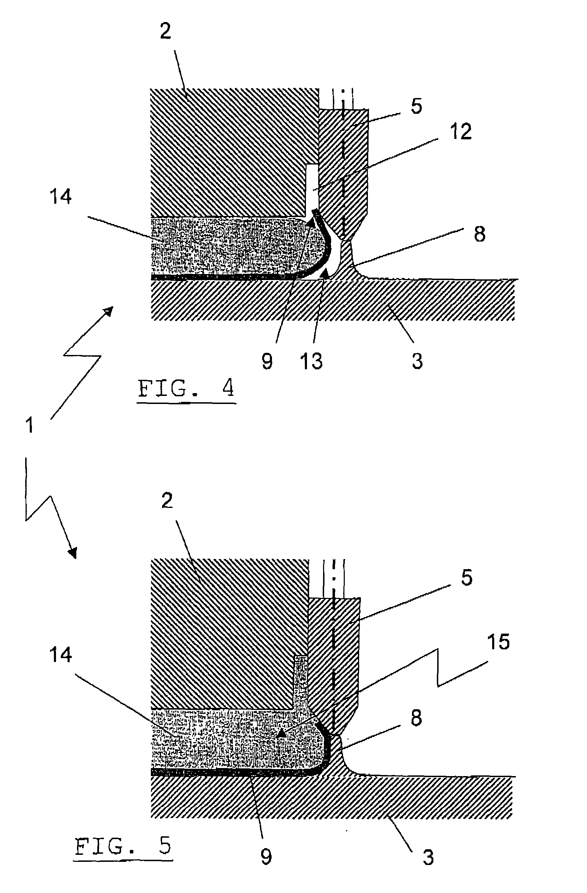

Die Figur 4 zeigt einen Ausschnitt aus dem Formwerkzeug 1 zum Zeitpunkt des Hinterformens. Beim Hinterformens wird die Kavität 13 von der Kernseite her mit dem thermoplastischen Kunststoff 14 befüllt. Dabei wird die Dekorfolie 9 gegen die Oberfläche der Matrize 3 und gleichzeitig aus der Nut 12 gedrückt. Bei der in Figur 4 gezeigten Momentaufnahme ist der Prozess des Hinterformens noch nicht abgeschlossen und die Kavität 13 ist noch nicht vollständig mit dem thermoplastischen Kunststoff 14 verfüllt.

In der Figur 5 ist der Ausschnitt aus Figur 4 zum Zeitpunkt des Abschlusses des Hinterformens wiedergegeben. In der ursprünglichen Kavität 13 ist jetzt der Dekorbereich 15 ausgebildet, der aus einem thermoplastischen Kunststoff 14 und der mit diesem Kunststoff 14 hinterformten Dekorfolie 9 besteht.

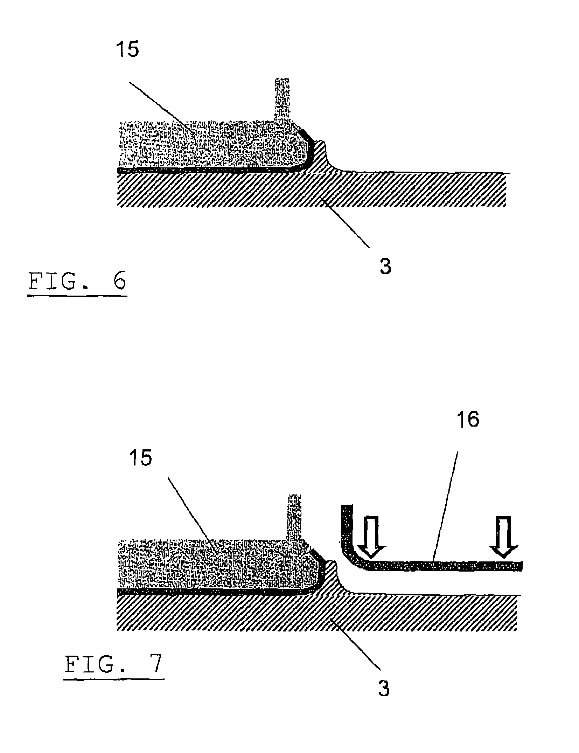

Die Figur 6 zeigt den Dekorbereich 15, der nach dem Öffnen des Formwerkzeugs 1 in der Matrize 3 des Werkzeugs 1 verbleibt, während das Formwerkzeug 1 für die Weiterverarbeitung und Ausbildung der an den Dekorbereich 15 angrenzenden Bereiche des Formteils vorbereitet werden kann.

Die Figur 7 zeigt eine Option zur Weiterverarbeitung bzw. Ausbildung des an den Dekorbereich 15 angrenzenden Bereichs. So kann, wie es in diesem Beispiel dargestellt wird, eine weitere Folie 16 in das Formwerkzeug 1 eingelegt werden, die dann in einem nächsten Arbeitsschritt ebenfalls hinterformt werden kann. Als weitere Option käme auch ein direktes Spritzgießen bzw. Ausformen des angrenzenden Bereichs in Frage.

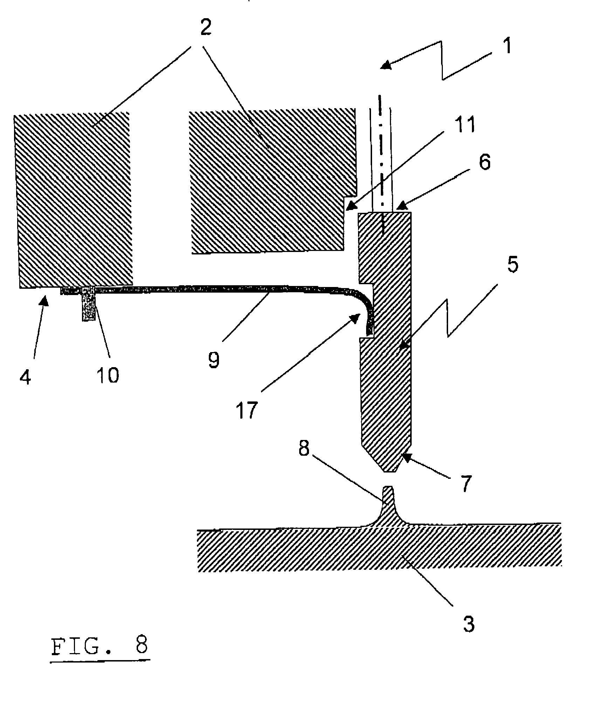

Die Figur 8 ist der Querschnitt eines Ausschnitts aus einem Formwerkzeug 1 in Analogie zu dem Ausschnitt aus Figur 1 mit der Ausnahme, dass ein Schieber 5 mit einer seitlichen Aussparung 17 dargestellt ist. Die Dekorfolie 9 ist im Formwerkzeug 1 zwischen Kern 2 und Schieber 5 eingelegt, wobei der Randbereich der Dekorfolie 9 in die seitliche Schieberaussparung 17 eingreift. Beim Schließen des Werkzeugs 1 wird die Dekorfolie 9 von der seitlichen Aussparung 17 des Schiebers 5 mitgenommen und in die dann zwischen Kern 2 und Schieber 5 durch die Aussparung 11 ausgebildete Nut eingeführt. Auch in diesem Ausführungsbeispiel ist die Dekorfolie 9 mit einem Befestigungsmittel 10 auf einer Spannfläche 4 fixiert. Auf der Oberfläche der Matrize 3 ist dem Schieber 5 direkt gegenüberliegend ein Steg 8 angeordnet.

### Bezugszeichenliste

- 1: Formwerkzeug
- 2: Formwerkzeugkern
- 3: Formwerkzeugmatrize
- 4: Spannfläche
- 5: Schieber
- 6: Schieberrückseite
- 7: Schiebervorderseite
- 8: Steg
- 9: Dekorfolie
- 10: Befestigungsmittel (Nadel)
- 11: Aussparung
- 12: Nut
- 13: Kavität
- 14: thermoplastischer Kunststoff
- 15: Dekorbereich
- 16: Dekorfolie
- 17: seitliche Schieberaussparung

## Patentansprüche

1. Verfahren zur Herstellung eines Formteils mit mindestens einem integrierten Dekorbereich (15) durch Hinterformen mindestens einer in ein einen Kern (2) und eine Matrize (3) umfassendes Formwerkzeug (1) eingelegten Dekorfolie (9) mit einem thermoplastischen Kunststoff (14),
**dadurch gekennzeichnet, dass**
a) in einem ersten Arbeitsgang die Dekorfolie (9) zwischen dem Kern (2) und einem im Kern (2) integrierten, bei geöffnetem Formwerkzeug aus dem Kern (2) hervorstehenden, den Dekorbereich begrenzenden und Mittel zu Mitnahme der Dekorfolie aufweisenden Schieber (5) in das Werkzeug (1) eingelegt wird,
b) das Werkzeug (1) geschlossen wird, wobei
- der Rand der Dekorfolie (9) mit Hilfe des Schiebers (5) in eine durch eine Aussparung (11) zwischen Kern (2) und Schieber (5) ausgebildete Nut (12) eingeführt wird und
- durch einen Formschluss zwischen Matrize (3) und Schieber (5) eine für die Hinterformung des Dekorbereichs (15) vorgesehene, zwischen Matrize (3) und Kern (2) ausgebildete Kavität (13) seitlich begrenzt wird,
c) die Dekorfolie (9) durch Einspritzen von thermoplastischem Kunststoff (14) kernseitig hinterformt wird, wobei die Dekorfolie (9) mit ihrer Sichtseite gegen die Matrizenoberfläche und mit ihrem Rand aus der Nut (12) heraus gegen den seitlichen Rand der Kavität (13) gedrückt wird, und
d) nach der Fertigstellung des Dekorbereiches (15) das Werkzeug (1) wieder geöffnet und anschließend in einem zweiten Arbeitsgang die an den Dekorbereich (15) angrenzenden Bereiche des Formteils ausgebildet werden.

2. Verfahren nach Anspruch 1,
**dadurch gekennzeichnet, dass**
ein Schieber (5) mit einer als Mittel zur Mitnahme der Dekorfolie (9) ausgebildeten flachen Rückseite (6) eingesetzt wird.

3. Verfahren nach Anspruch 1,
**dadurch gekennzeichnet, dass**
ein Schieber (5) mit einer als Mittel zur Mitnahme der Dekorfolie (9) ausgebildeten seitlichen Aussparung (17) eingesetzt wird.

4. Verfahren nach einem der Ansprüche 1 bis 3,
**dadurch gekennzeichnet, dass**
das Hinterformen durch Hinterspritzen oder Hinterschäumen erfolgt.

5. Verfahren nach einem der Ansprüche 1 bis 4,
**dadurch gekennzeichnet, dass**
die Dekorfolie (9) nach dem Einlegen in das Formwerkzeug auf einer auf der Kernseite des Formwerkzeugs (1) angeordneten Spannfläche (4) mit Hilfe eines Befestigungsmittels (10) fixiert wird.

6. Verfahren nach einem der Ansprüche 1 bis 5,
**dadurch gekennzeichnet, dass**
das der Schieber (5) eigenständig geschlossen wird.

7. Verfahren nach einem der Ansprüche 1 bis 6,
**dadurch gekennzeichnet, dass**
das Schließen des Schiebers (5) durch das Schließen des Werkzeugs (1) erfolgt, wobei der Schieber (5) von der Matrize (3) in Richtung Kern (2) verschoben wird.

8. Verfahren nach Anspruch 7,
**dadurch gekennzeichnet, dass**
die Betätigung des Schiebers (5) beim Schließen des Werkzeugs (1) durch korrespondierende, auf der Matrize (3) angeordnete Stege (8) erfolgt, wobei die Stege (8) mit dem Schieber (5) in eine Wirkverbindung treten und dabei einen Formschluss bilden.

9. Verfahren nach einem der Ansprüche 1 bis 8,
**dadurch gekennzeichnet, dass**
ein Schieber (5) mit einer dachförmig ausgebildeten Vorderseite (7) eingesetzt wird, durch die eine Kavität (13) für den Dekorbereich (15) mit einem rückläufigen seitlichen Rand ausgebildet wird, der nach dem Hinterformen bis hin zum rückläufig ausgebildeten Bereich von der Dekorfolie (9) bedeckt wird.

10. Verfahren nach einem der Ansprüche 1 bis 9,
**dadurch gekennzeichnet, dass**
als Dekorfolien (9) Gewebe, Dekorstoffe, Kunststoff-Folien, Teppichstoffe, Leder und Lederimitate eingesetzt werden.

11. Verfahren nach einem der Ansprüche 1 bis 10,
**dadurch gekennzeichnet, dass**
als thermoplastischer Kunststoff '(14) Polypropylen (PP), Polyethylen (PE), Polyurethan (PU), Acrylnitril-Butadien-Styrol (ABS), Acrylnitril-Butadien-Styrol / Polycarbonat Copolymerisat (ABS-PC) oder Polyamid (PA) eingesetzt wird.

12. Formwerkzeug (1) mit einem Formwerkzeugkern (2) und einer Formwerkzeugmatrize (3) zur Herstellung von Formteilen mit mindestens einem im Formteil integrierten Dekorbereich,
**dadurch gekennzeichnet, dass**
der Kern (2) einen für die Ausbildung eines Dekors vorgesehenen, von einem Schieber (5) begrenzten und an seinem Rand mit einer Aussparung (11) versehenen Bereich aufweist, wobei der Schieber (5) Mittel zur Mitnahme einer Dekorfolie aufweist und im geöffneten Zustand des Formwerkzeugs (1) so weit aus der Kernoberfläche herausragt, dass zwischen dem Kern (2) und den Mitteln zur Mitnahme einer Dekorfolie ausreichend Platz zum Einlegen einer Dekorfolie (9) vorgesehen ist.

13. Formwerkzeug nach Anspruch 12,
**dadurch gekennzeichnet, dass**
der Schieber (5) als Mittel zu Mitnahme einer Dekorfolie (9) kernseitig eine flach ausgebildete Schieberrückseite (6) aufweist.

14. Formwerkzeug nach Anspruch 12,
**dadurch gekennzeichnet, dass**
der Schieber (5) als Mittel zur Mitnahme einer Dekorfolie (9) eine seitliche Schieberaussparung (17) aufweist.

15. Formwerkzeug nach einem der Ansprüche 12 bis 14,
**dadurch gekennzeichnet, dass**
der Schieber (5) in Richtung Matrize (3) eine sich verjüngende vordere Schieberseite (7) mit einer für den Verbindungsschluss mit der Matrize (3) vorgesehenen flachen Vorderkante aufweist.

16. Formwerkzeug nach einem der Ansprüche 12 bis 15,
**dadurch gekennzeichnet, dass**
der Kern (2) im Dekorbereich zusätzlich eine Spannfläche (4) für die Fixierung der Dekorfolie (9) aufweist.

17. Formwerkzeug nach einem der Ansprüche 12 bis 16,
**dadurch gekennzeichnet, dass**
die Matrize (3) zum Schieber (5) korrespondierend angeordnete Stege (9) aufweist.

18. Formwerkzeug nach einem der Ansprüche 12 bis 17,
**dadurch gekennzeichnet, dass**
im geschlossenen Zustand des Formwerkzeugs (1) die Kavität (13) für den Dekorbereich (15) seitlich durch einen Formschluss zwischen Schieber (5) und Matrize (3) begrenzt ist, wobei zwischen Schieber (5) und Kern (2) eine Nut (12) zur Aufnahme des Rands der Dekorfolie (9) ausgebildet ist.
